# EUROPEAN PATENT APPLICATION

(11) **EP 4 811 818 A1**
(43) Date of publication of application: **23.09.2026**
(21) Application number: 26158067.4
(22) Date of filing: 12.02.2026
(51) Int. Cl.: H04R 1/40, H04R 3/00

(54) **METHOD FOR PROCESSING SOUND SIGNALS, AND DEVICE USING THE SAME**

(30) Priority: 20.03.2025 KR 20250035689; 29.05.2025 KR 20250070735
(71) Applicant: Deep Hearing Corp., Daejeon 34138 (KR)
(72) Inventor: AHN, Kang Hun, Daejeon (KR); KIM, Sung Won, Daejeon (KR); KIM, Yun Hyung, Daejeon (KR)
(74) Representative: Jung, Minkyu

(57) **Abstract**

A method for processing a sound signal using two acoustic sensors comprises receiving a training sound signal from the same sound source through a first acoustic sensor and a second acoustic sensor, which are arranged at separated locations, learning an artificial neural network model configured to set a bounded three-dimensional (3D) sound processing region based on the received training sound signal, the boundary of the 3D sound processing region being determined according to the relative positional relationship with the first acoustic sensor and the second acoustic sensor and processing a received target sound signal based on the 3D sound processing region using the learned artificial neural network model.

## Description

### CROSS-REFERENCE TO RELATED APPLICATION

This application claims the benefits of Korean Patent Application No. 10-2025-0035689, filed on March 20, 2025, and Korean Patent Application No. 10-2025-0070735 April 15, 2025, in the Korean Intellectual Property Office, the disclosures of which are incorporated herein in their entireties by reference.

### BACKGROUND

### 1. Field

The present invention relates to a method for processing a sound signal, and a device using the same, and more particularly, to a method for learning an artificial neural network model configured to set a three-dimensional (3D) sound processing region based on a training sound signal received through each of two acoustic sensors arranged at separated locations, and processing a target sound signal using the learned artificial neural network model, and a device using the same.

### 2. Description of the Related Art

A technology for selectively receiving only a sound signal transmitted from a specific distance range or direction using a plurality of acoustic sensors is utilized in various application fields.

For example, the technology for selectively receiving a sound signal may be applied to conference systems or remote video conferencing equipment to clearly receive only the voice of a specific speaker, thereby improving communication quality

In another application example, the technology for selectively receiving a sound signal may be used in hearing assistance devices to reduce listening burden by emphasizing only the sound coming from a specific direction, or may be utilized in small wearable devices such as wireless earphones or smart glasses to suppress ambient noise and selectively receive only the desired sound, thereby improving user experience.

Recently, selective sound reception technology has been utilized in various fields such as voice recognition-based artificial intelligence assistants, external sound recognition for autonomous vehicles, and surveillance systems.

### SUMMARY

According to an aspect of an inventive concept of the disclosure, a method for processing a sound signal using two acoustic sensors may comprise receiving a training sound signal from the same sound source through a first acoustic sensor and a second acoustic sensor, which are arranged at separated locations, learning an artificial neural network model configured to set a bounded three-dimensional (3D) sound processing region based on the received training sound signal, the boundary of the 3D sound processing region being determined according to the relative positional relationship with the first acoustic sensor and the second acoustic sensor, and processing a received target sound signal based on the 3D sound processing region using the learned artificial neural network model.

According to an embodiment, the 3D sound processing region may be a region defining a range of sounds to be received or a region defining a range of sounds not to be received.

According to an embodiment, the 3D sound processing region may be defined as at least a partial region of a cone shape having an axis passing through the first acoustic sensor and the second acoustic sensor as the central axis.

According to an embodiment, the 3D sound processing region may be determined based on a pre-set angular range formed with respect to the axis and a pre-set distance range from the first acoustic sensor and the second acoustic sensor.

According to an embodiment, the distance range separated from the first acoustic sensor and the second acoustic sensor may be determined by a distance separated from a midpoint between the first acoustic sensor and the second acoustic sensor on the axis.

According to an embodiment, the artificial neural network model may be a U-NET structure artificial neural network model or a Recurrent Neural Network (RNN) structure artificial neural network model.

According to an embodiment, the learning of the artificial neural network model may be based on a time difference between a first training sound signal received by the first acoustic sensor and a second training sound signal received by the second acoustic sensor, and a signal strength difference between the first training sound signal and the second training sound signal.

According to an embodiment, the learning of the artificial neural network model may include performing a Short Time Fourier Transform (STFT) on each of the first training sound signal and the second training sound signal, and calculating the time difference between the first training sound signal and the second training sound signal, and the signal strength difference between the first training sound signal and the second training sound signal, using the STFT-transformed first training sound signal and the STFT-transformed second training sound signal.

According to an embodiment, the learning of the artificial neural network model may comprise inputting the time difference between the first training sound signal and the second training sound signal and the signal strength difference between the first training sound signal and the second training sound signal as input features of the artificial neural network model to learn the artificial neural network model.

According to an embodiment, the time difference between the first training sound signal and the second training sound signal may be calculated based on the phase difference between the transformed first training sound signal and the transformed second training sound signal.

According to an embodiment, the time difference between the first training sound signal and the second training sound signal may be calculated based on a difference between a time point when the magnitude of the first training sound signal in the time domain has a maximum value and a time point when the magnitude of the second training sound signal in the time domain has a maximum value.

According to an embodiment, the signal strength difference between the first training sound signal and the second training sound signal may be calculated based on a magnitude difference between the transformed first training sound signal and the transformed second training sound signal, or a magnitude ratio between the transformed first training sound signal and the transformed second training sound signal.

According to an embodiment, the signal strength difference between the first training sound signal and the second training sound signal may be calculated based on a signal energy difference between the first training sound signal in the time domain and the second training sound signal in the time domain.

According to an embodiment, the processing of the received target sound signal based on the 3D sound processing region may include removing a target sound signal located outside of the 3D sound processing region or reducing the magnitude of a target sound signal located outside of the 3D sound processing region.

According to an embodiment, the processing of the received target sound signal based on the 3D sound processing region may include removing a target sound signal located inside the 3D sound processing region or reducing the magnitude of a target sound signal located inside the 3D sound processing region.

According to an embodiment, the learning of the artificial neural network model may be based on a Phase Difference Matrix containing time difference information between the first training sound signal received by the first acoustic sensor and the second training sound signal received by the second acoustic sensor, and the signal strength difference between the first training sound signal and the second training sound signal.

According to an aspect of an inventive concept of the disclosure, a sound signal processing device for processing a sound signal using two acoustic sensors may comprise a first acoustic sensor, a second acoustic sensor arranged at a separated location from the first acoustic sensor, and a processor configured to learn an artificial neural network model configured to set a bounded 3D sound processing region according to the relative positional relationship with the first acoustic sensor and the second acoustic sensor, based on a training sound signal received from the same sound source through the first acoustic sensor and the second acoustic sensor, and

process a received target sound signal based on the 3D sound processing region using the learned artificial neural network model.

According to the method and device of the embodiments of the present invention, since the 3D sound processing region can be set using only two acoustic sensors arranged at separated locations, the 3D sound reception region can be efficiently set with a simple and miniaturized structure.

The method and device according to the embodiments of the present invention can be easily applied to small devices or wearable devices, having the effect of minimizing the size and power consumption of the device.

### BRIEF DESCRIPTION OF THE DRAWINGS

Embodiments of the disclosure will be more clearly understood from the following detailed description taken in conjunction with the accompanying drawings in which:
FIG. 1 is a block diagram of a sound signal processing device according to an embodiment of the present invention.
FIG. 2 is a flowchart of a method for processing a sound signal according to an embodiment of the present invention.
FIG. 3 is a diagram for explaining a process in which a 3D sound processing region is determined in the method for processing a sound signal of FIG. 2.
FIG. 4 is an example of the 3D sound processing region set according to the process of FIG. 3.
FIG. 5 is a diagram illustrating detailed steps according to an embodiment of the step of learning the artificial neural network model shown in FIG. 2.
FIG. 6 is a diagram for explaining a process of calculating the time difference between the first training sound signal and the second training sound signal used in the learning process of the artificial neural network model of FIG. 5.
FIG. 7 is a diagram for explaining a process of calculating the signal strength difference between the first training sound signal and the second training sound signal used in the learning process of the artificial neural network model of FIG. 5.
FIG. 8 is a graph showing the sound signal processing effect of the sound signal processing device according to an embodiment of the present invention.
FIG. 9 is an example in which the sound signal processing device shown in FIG. 1 is implemented in a form combined with a wearable device.
FIG. 10 is an example in which the sound signal processing device shown in FIG. 1 is implemented in the form of a wireless microphone.
FIG. 11 is an example in which the sound signal processing device shown in FIG. 1 is implemented in a form combined with a wireless earphone.

### DETAILED DESCRIPTION

The technical idea of the present invention can have various modifications and can have various embodiments. Specific embodiments will be illustrated in the drawings and described in detail. However, it should be understood that this is not intended to limit the technical idea of the present invention to specific embodiments, but rather to include all modifications, equivalents, and substitutes falling within the scope of the technical idea of the present invention.

In describing the technical idea of the present invention, detailed descriptions of related known technologies will be omitted if it is determined that they may unnecessarily obscure the gist of the present invention. Furthermore, numbers (e.g., first, second, etc.) used in the description herein are merely identification symbols for distinguishing one component from another.

Also, in this specification, when a certain component is referred to as being "connected" or "coupled" to another component, it should be understood that the certain component may be directly connected or directly coupled to the other component, but unless there is specific contrary mention, it may also be connected or coupled via another intermediate component.

Furthermore, terms such as "unit," "er," "or," and "module" disclosed in this specification refer to a unit that processes at least one function or operation, and this may be implemented by hardware or software such as a processor, a micro processor, a micro controller, a central processing unit (CPU), a graphics processing unit (GPU), an accelerated processor unit (APU), a digital signal processor (DSP), an application specific integrated circuit (ASIC), and a field programmable gate array (FPGA), or a combination of hardware and software. Furthermore, the terms may be implemented in a form coupled to a memory that stores data necessary for processing at least one function or operation.

And it is clarified that the distinction between the components in this specification is merely a distinction based on the main function performed by each component. That is, two or more components described below may be combined into one component, or one component may be divided into two or more components according to more subdivided functions. In addition, it goes without saying that each of the components described below may additionally perform some or all of the functions of other components in addition to its own main function, and some of the main functions for which each of the components is responsible may be exclusively performed by other components.

Hereinafter, embodiments of the inventive concept will be described in detail with reference to the accompanying drawings.

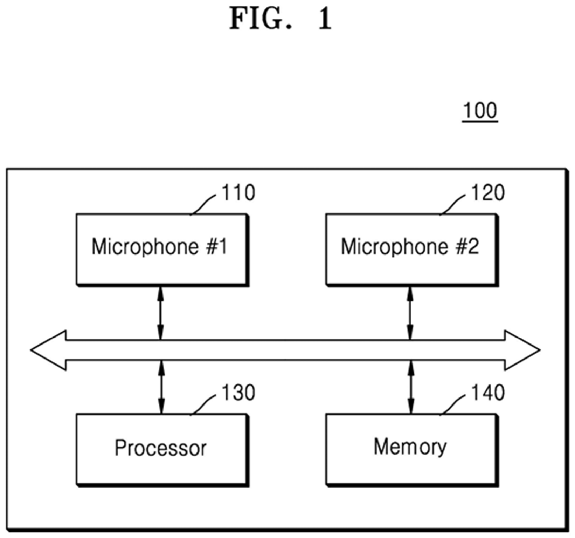

FIG. 1 is a block diagram of a sound signal processing device according to an embodiment of the present invention.

Referring to FIG. 1, the sound signal processing device 100 may include a first acoustic sensor 110, a second acoustic sensor 120, a processor 130, and a memory 140.

The first acoustic sensor 110 and the second acoustic sensor 120 are each arranged at separated locations and can receive a sound signal transmitted from the same sound source.

According to an embodiment, the sound signal processing device according to the embodiment of the present invention can be implemented with only two acoustic sensors and can process the received sound signal with a simple configuration without additional acoustic sensors.

Each of the first acoustic sensor 110 and the second acoustic sensor 120 can receive a training sound signal transmitted from the same sound source or a target sound signal transmitted from the same sound source.

Because the first acoustic sensor 110 and the second acoustic sensor 120 are arranged at separated locations, a time difference and a signal strength difference occur in the sound signals received by the first acoustic sensor 110 and the second acoustic sensor 120, respectively. The generated time difference and signal strength difference of the sound signal can be utilized in the learning process of the artificial neural network model for subsequent sound signal processing.

According to an embodiment, the time difference of the sound signal received by the first acoustic sensor 110 and the second acoustic sensor 120 may be referred to as Interaural Time Difference (ITD), but is not limited thereto.

According to an embodiment, the signal strength difference of the sound signal received by the first acoustic sensor 110 and the second acoustic sensor 120 may be referred to as Interaural Level Difference (ILD), but is not limited thereto.

According to an embodiment, the sound signal processing device according to the embodiment of the present invention may use a phase difference matrix including the time difference information, instead of the time difference of the sound signal received by the first acoustic sensor 110 and the second acoustic sensor 120, for the learning of the artificial neural network model for sound signal processing. Detailed content of the phase difference matrix will be described later.

According to an embodiment, the first acoustic sensor 110 and the second acoustic sensor 120 can each be implemented in a form including various types of sensors capable of receiving a sound signal.

According to an embodiment, the first acoustic sensor 110 and the second acoustic sensor 120 can each be implemented in various forms of microphones, for example, a dynamic microphone, an Electret Condenser Microphone (ECM), a MEMS (Micro-Electro-Mechanical Systems) microphone, etc., which convert the sound signal into an electric signal.

The processor 130 can learn an artificial neural network model configured to set a bounded three-dimensional (3D) sound processing region according to the relative positional relationship with the first acoustic sensor 110 and the second acoustic sensor 120, using the training sound signal received through the first acoustic sensor 110 and the second acoustic sensor 120.

According to an embodiment, the bounded region may be expressed differently as a limited region, a finite spatial region, or a closed region.

According to an embodiment, the relative positional relationship with the first acoustic sensor 110 and the second acoustic sensor 120 may mean positional relationships such as a distance from a reference point or reference line set by the first acoustic sensor 110 and the second acoustic sensor 120, and an angle from a reference point or reference line set by the first acoustic sensor 110 and the second acoustic sensor 120.

The processor 130 can process the target sound signal based on the 3D sound processing region using the learned artificial neural network model.

According to an embodiment, the artificial neural network model can be implemented in various forms such as a U-NET structure artificial neural network model or a Recurrent Neural Network (RNN) structure artificial neural network model.

According to an embodiment, the 3D sound processing region may be a region defining a range of sounds to be received or a region defining a range of sounds not to be received.

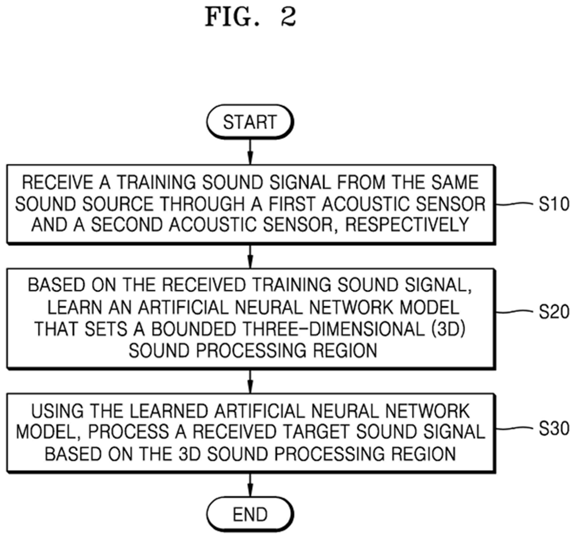

The detailed operation of the processor 130 will be described later with reference to FIGS. 2 to 7.

The memory 140 is coupled to the processor 130 and can store data such as the training sound signal and the target sound signal received by the first acoustic sensor 110 and the second acoustic sensor 120, various data necessary for sound signal processing, data generated during or according to the result of sound signal processing, and the learned artificial neural network model.

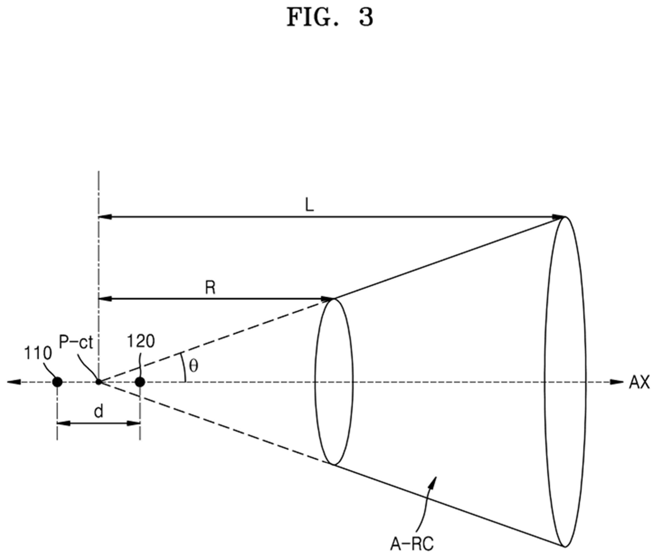

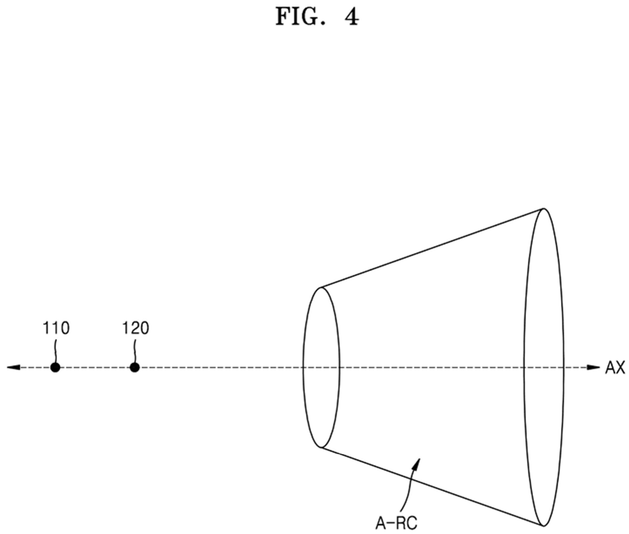

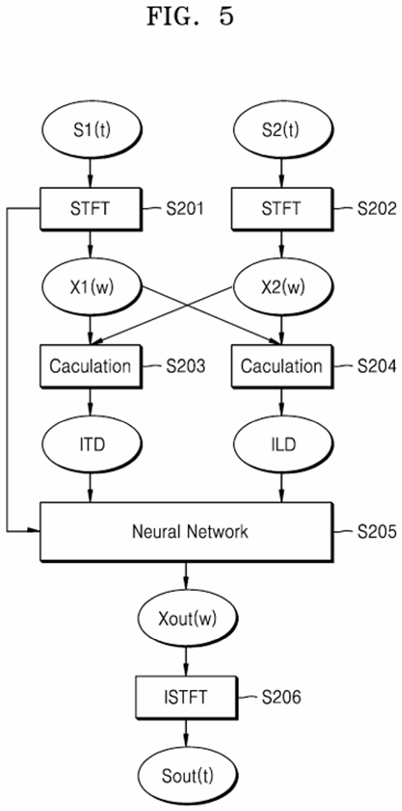

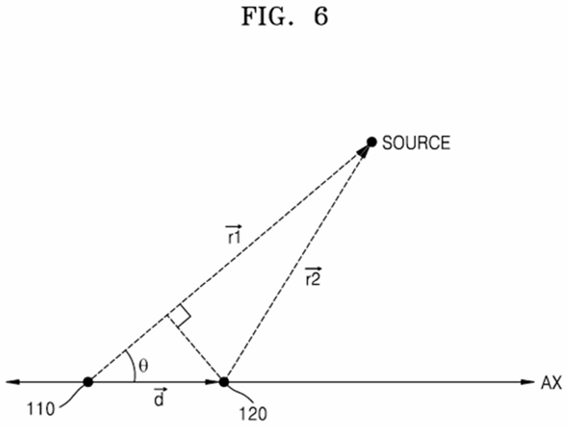

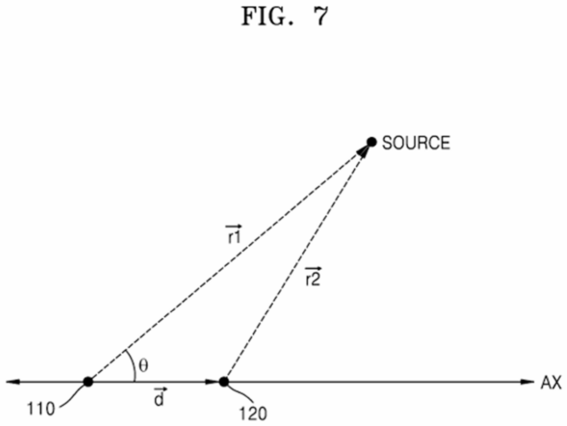

FIG. 2 is a flowchart of a method for processing a sound signal according to an embodiment of the present invention. FIG. 3 is a diagram for explaining a process in which a 3D sound processing region is determined in the method for processing a sound signal of FIG. 2. FIG. 4 is an example of the 3D sound processing region set according to the process of FIG. 3. FIG. 5 is a diagram illustrating detailed steps according to an embodiment of the step of learning the artificial neural network model shown in FIG. 2. FIG. 6 is a diagram for explaining a process of calculating the time difference between the first training sound signal and the second training sound signal used in the learning process of the artificial neural network model of FIG. 5. FIG. 7 is a diagram for explaining a process of calculating the signal strength difference between the first training sound signal and the second training sound signal used in the learning process of the artificial neural network model of FIG. 5.

Referring to FIG. 2, the sound signal processing device 100 according to an embodiment of the present invention can receive a training sound signal from the same sound source through the first acoustic sensor 110 and the second acoustic sensor 120, which are arranged at separated locations (S10).

According to an embodiment, the first acoustic sensor 110 may receive a first training sound signal from the same sound source, and the second acoustic sensor 120 may receive a second training sound signal from the same sound source. Because the first acoustic sensor 110 and the second acoustic sensor 120 are arranged to be separated from each other, a time difference (time difference of reception time point or phase difference) and a signal strength difference (signal magnitude difference) may occur between the first training sound signal and the second training sound signal

The sound signal processing device 100 can learn an artificial neural network model configured to set a bounded three-dimensional (3D) sound processing region according to the relative positional relationship with the first acoustic sensor 110 and the second acoustic sensor 120, based on the training sound signal received in step S10 (S20).

According to an embodiment, the artificial neural network model can be implemented in various forms such as a U-NET structure artificial neural network model or a Recurrent Neural Network (RNN) structure artificial neural network model.

According to an embodiment, the bounded 3D sound processing region can be defined as at least a partial region of a cone shape.

Referring also to FIG. 3, the bounded 3D sound processing region (A-RC) can be defined as at least a partial region of a cone shape having an axis (AX) passing through the first acoustic sensor 110 and the second acoustic sensor 120 as the central axis.

According to an embodiment, the at least partial region of the cone shape may be determined based on a pre-set angular range (e.g., 0 to θ) formed with respect to the axis (AX) passing through the first acoustic sensor 110 and the second acoustic sensor 120, and a pre-set distance range (e.g., R to L) from the first acoustic sensor 110 and the second acoustic sensor 120. At this time, the pre-set distance range (e.g., R to L) may be determined based on the distance separated from a midpoint (P-ct) between the first acoustic sensor 110 and the second acoustic sensor 120 on the axis (AX).

In this case, the axis (AX) passing through the first acoustic sensor 110 and the second acoustic sensor 120 may be the central axis of the cone shape, and the midpoint (P-ct) between the first acoustic sensor 110 and the second acoustic sensor 120 may correspond to the vertex of the cone shape. Also, the upper limit (e.g. θ) of the pre-set angular range corresponds to the opening angle of the cone shape, and the base surface of the cone shape may be formed at the upper limit (e.g., L) of the distance range. In the cone shape thus formed, only the region in the section of the pre-set distance range (e.g., R to L) can be defined as the bounded 3D sound processing region (A-RC). In this case, the region having the shape of a cone with height R removed from a cone shape with height L may be defined as the bounded 3D sound processing region (A-RC).

According to an embodiment, the lower limit of the pre-set angular range may have an arbitrary angle value other than 0 degrees. In this case, the sound processing region (A-RC) may be a shape where an area corresponding to a smaller cone shape (e.g., a cone shape with height R) is empty inside a larger cone shape (e.g., a cone shape with height L). At this time, the vertices of the large cone shape and the small cone shape may be the same.

Referring to FIG. 4, the at least partial region of the cone shape may be defined in the same form as the sound processing region (A-RC) shown in FIG. 4.

According to an embodiment, the step of learning the artificial neural network model in FIG. 2 may be performed through the detailed steps shown in FIG. 5.

Referring also to FIG. 5, the processor 130 of the sound signal processing device 100 can perform a Short Time Fourier Transform (STFT) on each of the first training sound signal (S1(t)) received by the first acoustic sensor 110 and the second training sound signal (S2(t)) received by the second acoustic sensor 120 (S201, S202).

As a result of performing the Short Time Fourier Transform on the first training sound signal (S1(t)) in step S201, a transformed first training sound signal (X1(w)) may be output.

As a result of performing the Short Time Fourier Transform on the second training sound signal (S2(t)) in step S202, a transformed second training sound signal (X2(w)) may be output.

According to an embodiment, the transformed first training sound signal (X1(w)) transformed in step S201 or the transformed second training sound signal (X2(w)) transformed in step S202 can be used for learning the artificial neural network model in step S205.

The processor 130 of the sound signal processing device 100 can calculate the time difference (ITD) between the first training sound signal (S1(t)) and the second training sound signal (S2(t)), using the transformed first training sound signal (X1(w)) and the transformed second training sound signal (X2(w)) (S203)

According to an embodiment, the time difference (ITD) between the first training sound signal (S1(t)) and the second training sound signal (S2(t)) can be calculated based on the phase difference between the transformed first training sound signal (X1(w)) and the transformed second training sound signal (X2(w)). In this case, the processor 130 can calculate the time difference (ITD) based on the following (Equation 1).$ITD = ang \left(X1*\left(w\right)X2\left(w\right)\right)$

According to another embodiment, the time difference (ITD) between the first training sound signal (S1(t)) and the second training sound signal (S2(t)) can be calculated based on the difference between a time point when the magnitude of the first training sound signal (S1(t)) has a maximum value and a time point when the magnitude of the second training sound signal (S2(t)) has a maximum value. In this case, the processor 130 can calculate the time difference (ITD) based on the following (Equation 2).$ITD = argmax \left(S1\left(t\right)\right) - argmax \left(S2\left(t\right)\right)$

Referring also to FIG. 6, a process is shown for acquiring information about the angle (θ) formed by the sound source with respect to the axis (AX) passing through the first acoustic sensor 110 and the second acoustic sensor 120, using the time difference (ITD) between the first training sound signal (S1(t)) and the second training sound signal (S2(t)).

The first acoustic sensor 110 and the second acoustic sensor 120 are arranged to be separated by a certain distance (d), and there is an axis (AX) passing through both the first acoustic sensor 110 and the second acoustic sensor 120.

The sound signal generated from the sound source may propagate to the first acoustic sensor 110 at a first distance (r1) 117and to the second acoustic sensor 120 at a second distance (r2).

When θ is the angle formed by the line segment connecting the sound source and the first acoustic sensor 110 with the axis (AX), the sound signal arrival time difference (△t) between the first acoustic sensor 110 and the second acoustic sensor 120 can be approximated as in the following (Equation 3), and θ can be calculated through (Equation 3).$Δt ≒ dcosθ / v$ (where v is the speed of sound)

Furthermore, the sound signal phase difference (γITD) between the first acoustic sensor 110 and the second acoustic sensor 120 can be expressed as in the following (Equation 4).${γ}_{ITD} - 2 πf Δ t - 2 πf \frac{d cos θ}{v}$ (where f is the frequency of the sound signal)

According to yet another embodiment, the processor 130 can learn the artificial neural network model using a Phase Difference Matrix (PDM) containing the time difference (ITD) information between the first training sound signal (S1(t)) and the second training sound signal (S2(t)). The Phase Difference Matrix (PDM) may be an expression of the phase difference between the first training sound signal (S1(t)) and the second training sound signal (S2(t)) in a time-frequency domain in a matrix form.

First, the processor 130 can perform a Fourier transform (e.g., Short Time Fourier Transform (STFT)) on each of the first training sound signal (S1(t)) and the second training sound signal (S2(t)) to generate the spectra ${X}_{1}^{\left(q\right)} \left(ω\right) , {X}_{2}^{\left(q\right)} \left(ω\right)$ in the time-frequency domain (where q is the time frame index and w is the frequency index).

Next, the processor 130 can obtain the Phase Difference Matrix containing the phase difference information at each time-frequency point (tq, wt) using the spectra ${X}_{1}^{\left(q\right)} \left(ω\right) , {X}_{2}^{\left(q\right)} \left(ω\right)$ in the time-frequency domain, based on the following (Equation 5).$PDM \left(t, {ω}_{q}\right) = \left|Im\left(ln\left(\frac{{X}_{t}^{\left(1\right)} \left({ω}_{q}\right)}{{X}_{t}^{\left(2\right)} \left({ω}_{q}\right)}\right)\right)\right| .$
(where PDM is the Phase Difference Matrix, and Im(·) denotes the imaginary part) 141

The above Phase Difference Matrix can include the time difference (ITD) information according to the relationship in the following (Equation 6).$PDM \left(t, {ω}_{q}\right) = {ω}_{q} \times ITD \pm 2 π {n}_{w}$ (where nw is a natural number)

According to an embodiment, the processor 130 can significantly improve the confusion caused by the phase repeating every 2n period by inputting the Phase Difference Matrix in the form of an image to the artificial neural network model for learning.

The processor 130 of the sound signal processing device 100 can calculate the signal strength difference (ILD) between the first training sound signal (S1(t)) and the first training sound signal (S2(t)), using the transformed first training sound signal ($X1(w)) and the transformed second training sound signal ($X2(w)) (S204).

According to an embodiment, the signal strength difference (ILD) between the first training sound signal (S1(t)) and the second training sound signal (S2(t)) may be the magnitude difference between the transformed first training sound signal (X1(w)) and the transformed second training sound signal ($X2(w)). In this case, the processor 130 can calculate the signal strength difference (ILD) based on the following (Equation 7).$ILD = \left|X1\left(w\right)\right| - \left|X2\left(w\right)\right|$

According to another embodiment, the signal strength difference (ILD) between the first training sound signal (S1(t)) and the second training sound signal (S2(t)) can be calculated based on the magnitude ratio between the transformed first training sound signal (X1(w)) and the transformed second training sound signal (X2(w)). In this case, the processor 130 can calculate the signal strength difference (ILD) based on the following (Equation 8).$ILD = \left|X1\left(w\right)\right| / \left|X2\left(w\right)\right|$

According to yet another embodiment, the signal strength difference (ILD) between the first training sound signal (S1(t)) and the second training sound signal (S2(t)) can be calculated based on the signal energy difference between the first training sound signal (S1(t)) in the time domain and the second training sound signal (S2(t)) in the time domain. In this case, the processor 130 can calculate the signal strength difference (ILD) based on the following (Equation 9).$ILD = {\sum }_{t} {S}_{1}^{2} \left(t\right) - {\sum }_{t} {S}_{2}^{2} \left(t\right)$

Referring also to FIG. 7, a process is shown for acquiring information about the distance separated from the first acoustic sensor 110 and the second acoustic sensor 120, using the signal strength difference (ILD) between the first training sound signal (S1(t)) and the second training sound signal (S2(t)).

The first acoustic sensor 110 and the second acoustic sensor 120 are arranged to be separated by a certain distance (d), and there is an axis (AX) passing through both the first acoustic sensor 110 and the second acoustic sensor 120.

The signal strength of the sound signal generated from the sound source has a relationship inversely proportional to the square of the distance (r) from the sound source.

That is, the signal strength (I1) of the sound signal acquired by the first acoustic sensor 110 and the signal strength (I2) of the sound signal acquired by the second acoustic sensor 120 have the relationship in the following (Equation 10).$\frac{{I}_{1}}{{I}_{2}} = \frac{{r}_{2}^{2}}{{r}_{1}^{2}}$

At this time, the magnitude ratio ( ηILD) of the signal strength (I1) of the sound signal acquired by the first acoustic sensor 110 and the signal strength (I2) of the sound signal acquired by the second acoustic sensor 120 can be calculated according to the following (Equation 11).${η}_{ILD} = \frac{{I}_{1}}{{I}_{2}} = \frac{{\left|\vec{r 2}\right|}^{2}}{{\left|\vec{r 1}\right|}^{2}} = \frac{{\left|\vec{r 1}-\vec{d}\right|}^{2}}{{\left|\vec{r 1}\right|}^{2}}$

The processor 130 of the sound signal processing device 100 can learn the artificial neural network model by inputting the time difference (ITD) between the first training sound signal (S1(t)) and the second training sound signal (S2(t)) and the signal strength difference (ILD) between the first training sound signal (S1(t)) and the second training sound signal (S2(t)) as input features of the artificial neural network model (S205).

According to an embodiment, the processor 130 of the sound signal processing device 100 can concatenate the input features corresponding to the time difference (ITD) and the signal strength difference (ILD) into a single vector, and learn the artificial neural network model using the concatenated vector.

According to an embodiment, the processor 130 of the sound signal processing device 100 can learn the artificial neural network model by inputting the Phase Difference Matrix in the form of an image instead of the time difference (ITD) between the first training sound signal (S1(t)) and the second training sound signal (S2(t)). In this case, the artificial neural network model can be learned by using the Phase Difference Matrix and the signal strength difference (ILD) as inputs.

When the output signal (Xout(w)) of the artificial neural network model is output, the processor 130 of the sound signal processing device 100 can perform an Inverse Short-Time Fourier Transform (ISTFT) on the output signal (Xout(w)) to output the output signal (Sout(t)) in the time domain.

If the 3D sound processing region is a region defining a range of sounds to be received, the processor 130 of the sound signal processing device 100 can output the sound signal corresponding to the sound source as the output signal (Sout(t)) as is or with amplification processing when the sound source exists inside the sound processing region (e.g., A-RC), and can output the output signal (Sout(t)) with attenuation processing when the sound source exists outside the sound processing region (A-RC).

According to an embodiment, the processor 130 of the sound signal processing device 100 can learn the artificial neural network model so that the target sound signal located outside the 3D sound processing region (e.g., A-RC) is removed and an output signal (Sout(t)) corresponding to 0 is output.

According to another embodiment, the processor 130 of the sound signal processing device 100 can learn the artificial neural network model so that an output signal (Sout(t)) with the magnitude of the target sound signal reduced is output when the target sound signal is located outside the 3D sound processing region (e.g., A-RC). For example, the processor 130 can learn the artificial neural network model so that the magnitude of the target sound signal located outside the 3D sound processing region (e.g., A-RC) is reduced in inverse proportion to the distance outside the sound processing region (e.g., A-RC) or in inverse proportion to the square of the distance outside the sound processing region (e.g., A-RC).

If the 3D sound processing region is a region defining a range of sounds not to be received, the processor 130 of the sound signal processing device 100 can output the sound signal corresponding to the sound source as the output signal (Sout(t)) with attenuation processing when the sound source exists inside the sound processing region (e.g., A-RC), and can output the output signal (Sout(t)) as is or with amplification processing when the sound source exists outside the sound processing region (A-RC).

According to an embodiment, the processor 130 of the sound signal processing device 100 can learn the artificial neural network model so that the target sound signal inside the 3D sound processing region (e.g., A-RC) is removed and an output signal (Sout(t)) corresponding to 0 is output.

According to another embodiment, the processor 130 of the sound signal processing device 100 can learn the artificial neural network model so that an output signal (Sout(t)) with the magnitude of the target sound signal reduced is output when the target sound signal is located inside the 3D sound processing region (e.g., A-RC). For example, the processor 130 can learn the artificial neural network model so that the magnitude of the target sound signal inside the 3D sound processing region (e.g., A-RC) is reduced at a uniform ratio inside the sound processing region (e.g., A-RC).

According to an embodiment, the processor 130 of the sound signal processing device 100 can learn the artificial neural network model through supervised learning.

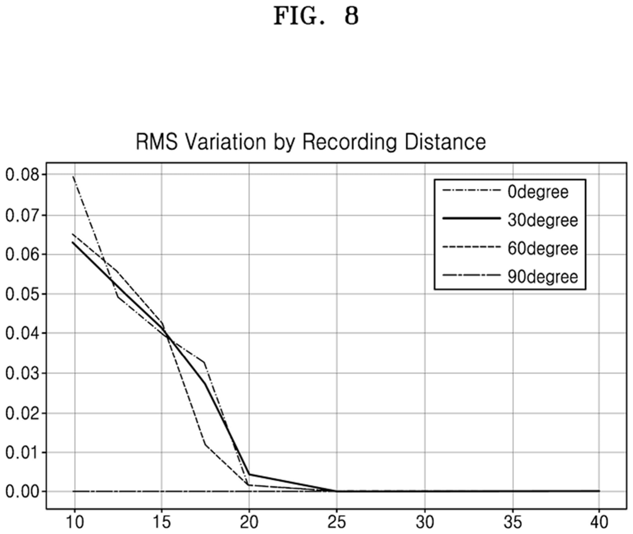

FIG. 8 is a graph showing the sound signal processing effect of the sound signal processing device according to an embodiment of the present invention.

Referring to FIG. 8, the case is shown where the 3D sound processing region in the sound signal processing device according to an embodiment of the present invention is set as a region for receiving sound, with the distance from the reference point (e.g., the midpoint between the first acoustic sensor 110 and the second acoustic sensor 120) being 0 to 20cm and the angle formed with the reference line (e.g., the axis (AX) passing through the first acoustic sensor 110 and the second acoustic sensor 120) being 0 to 60 degrees.

The horizontal axis of the graph shown in FIG. 8 represents the distance from the reference point, and the vertical axis represents the magnitude of the received sound (e.g., the RMS (Root Mean Square) value of the sound signal).

Referring to the graph, the sound in the 0 to 60 degree angular range (0 degree, 30 degrees, 60 degrees) set as the 3D sound processing region is normally received, and the sound at the 90 degree angle, which is outside the set angular range, is not received. Furthermore, it can be confirmed that the sound in the 0 to 20cm distance range set as the 3D sound processing region is received, but the intensity of the sound signal outside the set distance range converges to a value close to 0.

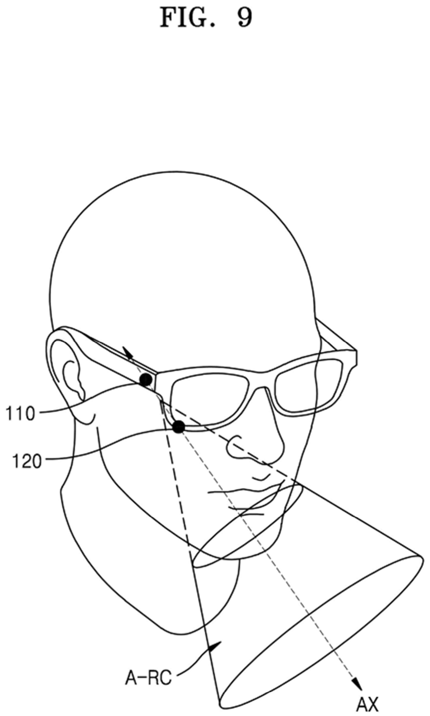

FIG. 9 is an example in which the sound signal processing device shown in FIG. 1 is implemented in a form combined with a wearable device.

Referring to FIG. 9, an embodiment is shown where the sound signal processing device 100 is combined with a wearable device to extract only the voice of the user wearing the wearable device.

In this case, the first acoustic sensor 110 and the second acoustic sensor 120 included in the sound signal processing device 100 can be arranged so that the axis (AX) passing through both the first acoustic sensor 110 and the second acoustic sensor 120 passes near the mouth of the user of the wearable device.

For example, when the wearable device is implemented in the form of glasses, the first acoustic sensor 110 and the second acoustic sensor 120 can be arranged at separated locations on the frame of the glasses.

In this case, the sound processing region (A-RC) can be set around the user's mouth to receive only the user's voice.

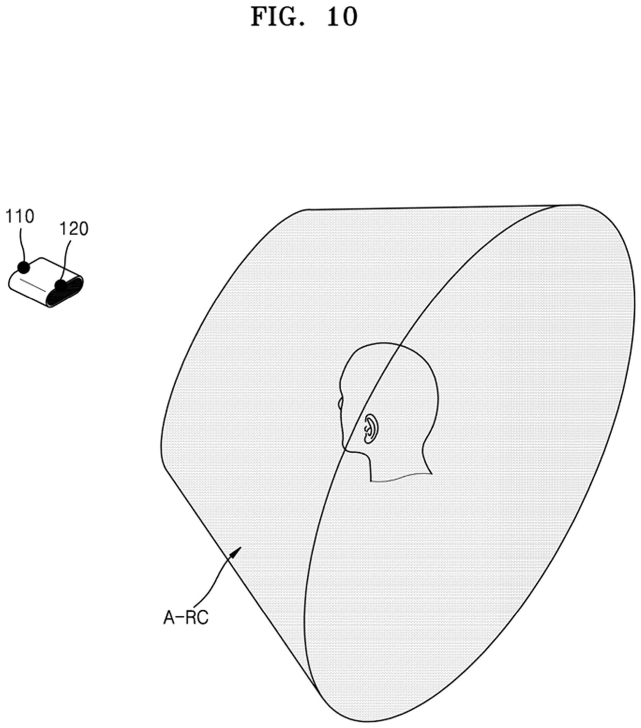

FIG. 10 is an example in which the sound signal processing device shown in FIG. 1 is implemented in the form of a wireless microphone.

Referring to FIGS. 1 and 10, the sound signal processing device 100 can be implemented in the form of a wireless microphone (e.g., a Bluetooth microphone).

The first acoustic sensor 110 and the second acoustic sensor 120 can be arranged at separated locations in the wireless microphone device.

In this case, the sound processing region (A-RC) can be set around the user's face to receive only the user's voice.

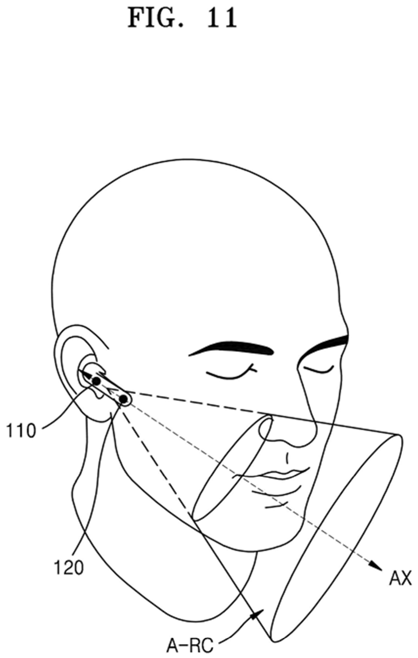

FIG. 11 is an example in which the sound signal processing device shown in FIG. 1 is implemented in a form combined with a wireless earphone.

FIG. 11 shows an example where the sound signal processing device shown in FIG. 1 is combined with a wireless earphone (e.g., TWS (True Wireless Stereo) earphone).

According to an embodiment, the sound signal processing device 100 can be implemented in a form combined with one side of the separated wireless earphone units.

Referring to FIG. 11, an embodiment is shown where the sound signal processing device 100 is combined with a wireless earphone to extract only the voice of the user wearing the wireless earphone.

In this case, the first acoustic sensor 110 and the second acoustic sensor 120 included in the sound signal processing device 100 can be arranged so that the axis (AX) passing through both the first acoustic sensor 110 and the second acoustic sensor 120 passes near the mouth of the user of the wireless earphone.

For example, the first acoustic sensor 110 and the second acoustic sensor 120 can be arranged at separated locations on one side of the wireless earphone.

In this case, the sound processing region (A-RC) can be set around the user's mouth to receive only the user's voice.

According to another embodiment, when the sound signal processing device is implemented in a form combined with a hearing assistance device instead of a wireless earphone, the 3D sound processing region according to the embodiment of the present invention can be set as a region defining a range of sounds not to be received.

In this case, by setting the 3D sound processing region around the mouth of the hearing aid wearer, the problem of the hearing aid wearer's voice being amplified and heard can be solved by excluding the hearing aid wearer's voice.

It will be apparent to one of ordinary skill in the art that various changes and modifications are possible within a range that does not deviate from the basic principles of the present disclosure.

## Claims

1. A method for processing a sound signal using two acoustic sensors, the method comprising:
receiving a training sound signal from the same sound source through a first acoustic sensor and a second acoustic sensor, which are arranged at separated locations;
learning an artificial neural network model configured to set a bounded three-dimensional (3D) sound processing region based on the received training sound signal, the boundary of the 3D sound processing region being determined according to the relative positional relationship with the first acoustic sensor and the second acoustic sensor; and
processing a received target sound signal based on the 3D sound processing region using the learned artificial neural network model.

2. The method of claim 1, wherein the 3D sound processing region is a region defining a range of sounds to be received or a region defining a range of sounds not to be received.

3. The method of claim 1 or 2, wherein the 3D sound processing region is defined as at least a partial region of a cone shape having an axis passing through the first acoustic sensor and the second acoustic sensor as the central axis.

4. The method of claim 3, wherein the 3D sound processing region is determined based on a pre-set angular range formed with respect to the axis and a pre-set distance range from the first acoustic sensor and the second acoustic sensor.

5. The method of claim 4, wherein the distance range separated from the first acoustic sensor and the second acoustic sensor is determined by a distance separated from a midpoint between the first acoustic sensor and the second acoustic sensor on the axis.

6. The method of any one of claims 1 to 5, wherein the artificial neural network model is a U-NET structure artificial neural network model or a Recurrent Neural Network (RNN) structure artificial neural network model.

7. The method of any one of claims 1 to 6, wherein the learning of the artificial neural network model is based on a time difference between a first training sound signal received by the first acoustic sensor and a second training sound signal received by the second acoustic sensor, and a signal strength difference between the first training sound signal and the second training sound signal.

8. The method of claim 7, wherein the learning of the artificial neural network model includes:
performing a Short Time Fourier Transform (STFT) on each of the first training sound signal and the second training sound signal; and
calculating the time difference between the first training sound signal and the second training sound signal, and the signal strength difference between the first training sound signal and the second training sound signal, using the STFT-transformed first training sound signal and the STFT-transformed second training sound signal.

9. The method of claim 8, wherein the learning of the artificial neural network model comprises inputting the time difference between the first training sound signal and the second training sound signal and the signal strength difference between the first training sound signal and the second training sound signal as input features of the artificial neural network model to learn the artificial neural network model.

10. The method of any one of claims 7 to 9, wherein the time difference between the first training sound signal and the second training sound signal is calculated based on : the phase difference between the transformed first training sound signal and the transformed second training sound signal; or based on a difference between a time point when the magnitude of the first training sound signal in the time domain has a maximum value and a time point when the magnitude of the second training sound signal in the time domain has a maximum value.

11. The method of any one of claims 7 to 10, wherein the signal strength difference between the first training sound signal and the second training sound signal is calculated based on : (i) a magnitude difference between the transformed first training sound signal and the transformed second training sound signal; (ii) a magnitude ratio between the transformed first training sound signal and the transformed second training sound signal; or (iii) a signal energy difference between the first training sound signal in the time domain and the second training sound signal in the time domain.

12. The method of any one of claims 1 to 11, wherein the processing of the received target sound signal based on the 3D sound processing region includes removing a target sound signal located outside of the 3D sound processing region or reducing the magnitude of a target sound signal located outside of the 3D sound processing region.

13. The method of any one of claims 1 to 11, wherein the processing of the received target sound signal based on the 3D sound processing region includes removing a target sound signal located inside the 3D sound processing region or reducing the magnitude of a target sound signal located inside the 3D sound processing region.

14. The method of any one of claims 1 to 13, wherein the learning of the artificial neural network model is based on a Phase Difference Matrix containing time difference information between the first training sound signal received by the first acoustic sensor and the second training sound signal received by the second acoustic sensor, and the signal strength difference between the first training sound signal and the second training sound signal.

15. A sound signal processing device for processing a sound signal using two acoustic sensors, the device comprising:
a first acoustic sensor;
a second acoustic sensor arranged at a separated location from the first acoustic sensor; and
a processor configured to:
learn an artificial neural network model configured to set a bounded 3D sound processing region according to the relative positional relationship with the first acoustic sensor and the second acoustic sensor, based on a training sound signal received from the same sound source through the first acoustic sensor and the second acoustic sensor, and
process a received target sound signal based on the 3D sound processing region using the learned artificial neural network model.
